# EUROPEAN PATENT APPLICATION

(11) **EP 4 708 749 A1**
(43) Date of publication of application: **11.03.2026**
(21) Application number: 24382962.9
(22) Date of filing: 09.09.2024
(51) Int. Cl.: H04L 5/00, H04L 67/125, G05D 1/226, G05D 1/695, G05D 1/698, G05D 109/20

(54) **AIRBORNE NETWORKED COMMUNICATION SYSTEM AND METHOD FOR A REMOTE CONTROL SYSTEM**

(71) Applicant: Airbus Defence and Space, S.A.U., 28906 Getafe - Madrid (ES)
(72) Inventor: Martínez Morán, Guillermo, Getafe (ES); Sánchez de Rivera Córdoba, Diego, Getafe (ES); Sanz Fernández, Juan José, Getafe (ES); Franco González, Alejandro, Getafe (ES); Maganto Pascual, Miguel, Getafe (ES)
(74) Representative: Elzaburu S.L.P.

(57) **Abstract**

Airborne networked communication system and method for a remote control system comprising:
- a first aircraft (1) comprising a controller and data transmission means for sending and receiving data from and to a plurality of second aircraft (2, 3, ...n),
- the plurality of second aircraft (2, 3, ...n) comprising data transmission means, a sensor and an actuator controlled by the controller of the first aircraft (1).

The data transmission means from the first aircraft (1) to the plurality of second aircraft (2, 3, ...n) uses a first dedicated channel or frequency (F1). The data transmission means from the plurality of second aircraft (2, 3, ...n) to the first aircraft (1) uses a second dedicated channel or frequency (F2) and a different orthogonal code sequence (Code#1, Code#2, ...) for each second aircraft (2, 3, ...n) for the first aircraft (1) to distinguish among the different second aircraft (2, 3, ...n).

## Description

### Field of the invention

The invention refers to an airborne networked communication system exhibiting low-latency suitable for remote control applications. It belongs to the field of distributed automation of any airborne application, which requires hard real-time communications across, for instance, different aircraft. An application example is the remote close-control loop of an aircraft, i.e., placing the flight control computer in another aircraft.

### Background of the invention

All control systems, no matter airborne or on ground, are time-critical systems. All of them need to obtain information and send commands within a given time frame. Otherwise, performance is degraded up to the point of becoming an unstable system, if data delivery time variance is large enough. Therefore, control systems require hard real-time low-latency communication systems.

A fly-by-wire flight control system requires communication means between controller, sensors and actuators. The need was firstly solved using point-to-point communications based on ARINC-429 direct cablings among equipment.

As complexity scaled up and more and more connections were required, the need of a network solution appeared, giving birth to a "fieldbus" called AFDX (ARINC 664). This fieldbus is a network system for real-time distributed control.

A similar development path has been followed during industrial sector automatization, starting with point-to-point communications (RS-232 or RS-485) and evolving to fieldbuses like EtherCat, PROFINET or PROFIBUS. Next step being developed in the industrial sector is the introduction of wireless communications fulfilling Ultra-Reliable-Low-Latency Communications (URLLC), with use cases like the control of surgery robots through 5G wireless communications. URLLC profile within 5G standard is still under definition and has not yet become operational.

In the aeronautical sector, an Ultra-Reliable-Low-Latency wireless approach will be needed to implement capabilities like unmanned or manned-unmanned close formation and refuelling operations.

### Summary of the invention

The object of the invention is to provide an airborne low-latency communication system suitable for remote control systems. The system may have several applications, among others, in automatized air-to-air refuelling and in collaborative aerial maneuvers like, for instance, aircraft close formation operations.

It is an object of the invention an airborne networked communication system providing low latency links for a remote-control system. The communication system comprises:
- a first aircraft comprising a controller and data transmission means configured to send and receive data from and to a plurality of second aircraft,
- the plurality of second aircraft comprising data transmission means configured to send and receive data from and to the first aircraft. The plurality of second aircraft comprising at least a sensor and an actuator configured to be controlled by the controller of the first aircraft.

The data transmission means from the first aircraft to the plurality of second aircraft is configured to be performed using a first dedicated channel or frequency (F1) and the data transmission means from the plurality of second aircraft to the first aircraft is performed using a second dedicated channel or frequency (F2) wherein the data transmission means of each aircraft of the plurality of second aircraft is configured to use a different orthogonal code sequence (Code#1, Code#2, ...) in order for the first aircraft to distinguish among the different second aircraft.

Thus, the communication system comprises a controller located in the first aircraft and at least a sensor and an actuator located in all or some of the second aircraft. The communication system comprises data transmission means located in the first aircraft and in each of the aircraft of the plurality of second aircraft. The sensor sends data to the controller and the controller receives said sensor data and sends instructions to the actuators. Sensors and actuators may be located in each of the second aircraft or in one of the aircraft or in different aircrafts.

In an embodiment, the communications physical layer is based on a combination of Frequency Division Duplexing (FDD) or Time Division Duplexing (TDD), and Code Division Multiple Access (CDMA).

CDMA (Code Division Multiple Access) is a communication technique that allows multiple emitters to send legible data simultaneously over one frequency. This is achieved through the use of spreading codes, whereby a single data bit is "spread" over a longer sequence of transmitted bits. These codes must be carefully chosen so that the data may be correctly "despread" at the receiver. Such codes are known as orthogonal codes.

In an embodiment, FDD/TDD schema is used to be able to send simultaneous information from the first aircraft to each of the second aircraft and from each of the second aircraft to the first aircraft. In an embodiment the first aircraft is a tanker aircraft, and the second aircraft is a receiver aircraft. Thus, FDD/TDD is used in the communication tanker-to receiver and receiver-to-tanker.

In an embodiment, CDMA would be used to distinguish among the different second aircraft when sending information to the first aircraft. Thus, in the mentioned embodiment, it is used to distinguish among the different receivers when sending information from receiver-to-tanker.

Data transmission from the first aircraft to a second aircraft is performed using a first dedicated channel or frequency (F1), with any modulation, e.g. phase-shift keying (PSK). The message sent in this frequency contains all the information needed for all the second aircraft. Each second aircraft only listens to the information relevant for him, e.g. the discrimination of information can be performed at any level, physical level or Internet Protocol (IP) packet level.

Data transmission from any of the second aircraft to the first aircraft, for instance, receiver-to-tanker, is performed using a second dedicated channel or frequency (F2), with any modulation schema (e.g. PSK). In order to distinguish among the different second aircraft, each second aircraft will use a different orthogonal code sequence (Code#1, Code#2, ...) according to the claimed invention.

According to the above, the proposed solution provides a low latency airborne communication system, where several aircraft can be controlled from one of them sharing the available resources. It is a hard real-time wireless fieldbus suitable for airborne remote control applications.

The proposed system and method allow the creation of a networked communication system with hard real-time capabilities that allows the use of a control loop between multiple actors, with no degradation in form of time delays, thus improving scalability for control applications.

The additional capabilities that FDD/TDD-CDMA offer, eliminate the constrains found in Time Domain Multiple Access (TDMA)-only based communications. Real-time is obtained by using wired-like communication through pre-allocated frequency using FDD, also allowing bi-directional communication. Multiple simultaneous channels can be transmitting at the same time through pre-allocated orthogonal codes using CDMA.

Latency is kept at a bounded value using the combination of the said FDD,TDD and CDMA techniques.

It is also an object of the invention an airborne networked communication method for a remote control system. The communication method comprises:
- sending and receiving data from the transmission means of a first aircraft comprising a controller to a plurality of second aircraft,
- sending and receiving data from the transmission means of a second aircraft of the plurality of second aircraft to the first aircraft, the plurality of second aircraft comprising at least a sensor and an actuator controlled by the controller of the first aircraft.

Data transmission means from the first aircraft to the plurality of second aircraft is performed using a first dedicated channel or frequency (F1) and the data transmission means from the plurality of second aircraft to the first aircraft is performed using a second dedicated channel or frequency (F2). Wherein the data transmission means of each aircraft of the plurality of second aircraft uses a different orthogonal code sequence (Code#1, Code#2, ...) in order the first aircraft to distinguish among the different second aircraft.

As previously stated, among others, the claimed invention has a direct application in Autonomous Assets Air-to-Air Refuelling (A4R):
- Automation of transfer flights of fighter aircraft.
- BOOM refuelling of unmanned and manned aircraft.
- Hose and Drogue refuelling of unmanned and manned aircraft.

And it also has a direct application in collaborative aerial maneuvers that can also take advantage of the claimed invention for:
- Close formation of unmanned aircraft.
- Loyal Wingman in close formation with Lead aircraft.
- Man-Unmanned Teaming (MUT) operations

### Description of the figures

To complete the description and to provide for a better understanding of the invention, a set of drawings is provided. Said drawings form an integral part of the description and illustrate preferred embodiments of the invention. The drawings comprise the following figures.
Figure 1 shows a schematic representation of a low latency airborne communication system based on FDD/TDD-CDMA enabling remote control applications.
Figure 2 shows a schematic representation of a processing cycle time for remote control application.
Figure 3 shows the schematic representation of data transmission using a Time division multiple access (TDMA).

### Detailed description of the invention

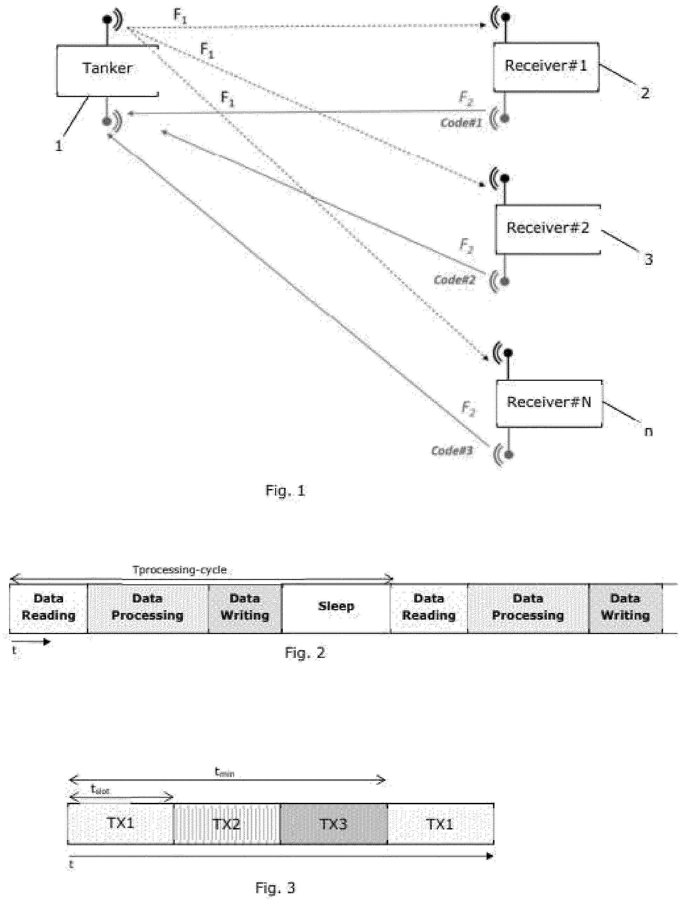

Figure 1 discloses an embodiment of a low latency airborne networked communication system for remote control applications, comprising:
- a first aircraft (1) comprising a controller and data transmission means configured to send and receive data from and to a plurality of second aircraft (2, 3, ...n),
- the plurality of second aircraft (2, 3, ...n) comprising data transmission means configured to send and receive data from and to the first aircraft (1), the plurality of second aircraft (2, 3, ...n) comprising at least a sensor and an actuator configured to be controlled by the controller of the first aircraft (1),

The data transmission means from the first aircraft (1) to the plurality of second aircraft (2, 3, ...n) is configured to be performed using a first dedicated channel or frequency (F1). The data transmission means from the plurality of the second aircraft (2, 3, ...n) to the first aircraft (1) is performed using a second dedicated channel or frequency (F2). The data transmission means of each second aircraft of the plurality of second aircraft (2, 3, ...n) is configured to use a different orthogonal code sequence (Code#1, Code#2, ...) in order for the first aircraft (1) to distinguish among the different second aircraft (2, 3, ...n).

Figure 2 discloses an embodiment of an aircraft control system workflow that is as follows, the Processing-Cycle time including Data reading, data processing, data writing and sleep.

All data needed for each Processing-Cycle must be available before the Data Reading time. If not, the Processing-Cycle will be done without new data.

Fulfilling this requirement using Time Division Multiple Access (TDMA) datalinks, implies synchronizing the data generator, the data transmission and the data processor. Implementing a fully synchronized remote control system is technically difficult. The claimed invention does not need to implement a fully synchronized system, as each emitter can send data at any time without interfering the other emitters.

Moreover, a TDMA schema has a limited scalability capacity, as all the transmissions have to be done in less than a Processing-Cycle time (tₘᵢₙ < t_{Proccesing-Cycle}), which is stablished by the control application

The proposed invention is more scalable than TDMA, as it eliminates the limitation of the Processing-Cycle time. Even if this time is very short all transmitters with an assigned code can emit. With TDMA each transmitter has to emit at a set time and for that they all have to have the same time reference, i.e., a synchronised system. With the invention, all emitters can emit as soon as they have the data, eliminating the need for a common time reference.

In addition, the Processing Cycle has a duration that is set by the application. In TDMA, the emitters emit one after the other, they do not emit at the same time. The number of emitters is limited by the Porcessing-Cycle.

With the proposed invention, all the emitters can emit at once and that restriction is removed. There is a limit which is the number of codes that can be implemented, but it is higher and does not impact the Processing-Cycle duration.

Figure 3 illustrates how the different transmissions occupy the air channel time. In the TDMA scheme, for Transmitter 1 (TX1) to have a chance to transmit again, it has to wait until all transmitters (TXi) have transmitted and its corresponding tₛₗₒₜ arrives again. In turn, the more transmitters there are in the network, the more total time and/or the less individual time there is for communication.

Additionally, the proposed invention preserves the characteristics of bi-directionality and high throughput.

The orthogonal code sequences have low cross-correlation values between them and also a low auto-correlation when the code does not match with itself. The sum of a large number of code sequences for each node results in multiple access interference (MAI) that is approximated by a gaussian noise process.

Given the CDMA scheme, each transmitter transmits with a different code, 'but' on the same frequency. This means that, although the orthogonal codes are not related, each code can statistically superimpose itself on the other codes in the form of Gaussian noise. Depending on the power with which this code emits, the noise will be higher or lower, and therefore in this scheme it is important to control it.

Controlling the signal strength is an important issue with CDMA, if all of the signals are received with the same power level. Then the variance of the MAI increases in direct proportion to the number of users. In an embodiment, the closest the second aircraft (2) is to the first aircraft (1) the lower the radio frequency (RF) power level is in order not to hide transmissions from other second aircraft (2).

For that reason, the controller comprises means to adapt the power level of the first dedicated frequency (F1) and of the second dedicated frequency (F2) depending on the distance between the first aircraft (1) and a second aircraft (2, 3, ...n) of the plurality of second aircraft (2, 3, ...n).

More specifically, the means are configured to adapt the power level so that the closest the second aircraft of the plurality of aircraft (2, 3, ...n) is to the first aircraft (1), the lower the radio frequency power level is.

It is also an object of the invention a first aircraft (1) comprising a controller and data transmission means configured to send and receive data from and to a plurality of second aircraft (2, 3, ...n). The plurality of second aircraft (2, 3, ...n) comprising a least a sensor and an actuator configured to be controlled by the controller of the first aircraft (1). The first aircraft (1) and the plurality of second aircraft (2, 3, ...n) being comprised in an airborne communication system for a remote control system. The data transmission means from the first aircraft (1) to the plurality of second aircraft (2, 3, ...n) is configured to be performed using a first dedicated channel or frequency (F1). The data transmission means from the plurality of second aircraft (2, 3, ...n) to the first aircraft (1) is performed using a second dedicated channel or frequency (F2). The data transmission means of each aircraft of the plurality of second aircraft (2, 3, ...n) is configured to use a different orthogonal code sequence (Code#1, Code#2, ...) in order the first aircraft (1) to distinguish among the different second aircraft (2, 3, ...n).

It is also an object of the invention a second aircraft (2) of a plurality of second aircraft (2, 3, ...n). The second aircraft (2) comprising data transmission means configured to send and receive data to a first aircraft (1). The second aircraft (2, 3, ...n) comprising at least a sensor and an actuator configured to be controlled by a controller of the first aircraft (1). The first aircraft (1) and the plurality of second aircraft (2, 3, ...n) being comprised in an airborne communication system for a remote control system. The data transmission means from the first aircraft (1) to the plurality of second aircraft (2, 3, ...n) is configured to be performed using a first dedicated channel or frequency (F1). The data transmission means from the plurality of second aircraft (2, 3, ...n) to the first aircraft (1) is performed using a second dedicated channel or frequency (F2). The data transmission means of each aircraft of the plurality of second aircraft (2, 3, ...n) is configured to use a different orthogonal code sequence (Code#1, Code#2, ...) in order the first aircraft (1) to distinguish among the different second aircraft (2, 3, ...n).

## Claims

1. Airborne networked communication system for a remote control system, **characterized in that** the communication system comprises:
- a first aircraft (1) comprising a controller and data transmission means configured to send and receive data from and to a plurality of second aircraft (2, 3, ...n),
- the plurality of second aircraft (2, 3, ...n) comprising data transmission means configured to send and receive data from and to the first aircraft (1), the plurality of second aircraft (2, 3, ...n) comprising at least a sensor and an actuator configured to be controlled by the controller of the first aircraft (1),
wherein the data transmission means from the first aircraft (1) to the plurality of second aircraft (2, 3, ...n) is configured to be performed using a first dedicated channel or frequency (F1) and the data transmission means from the plurality of second aircraft (2, 3, ...n) to the first aircraft (1) is configured to be performed using a second dedicated channel or frequency (F2) wherein the data transmission means of each second aircraft (2, 3, ...n) of the plurality of second aircraft (2, 3, ...n) is configured to use a different orthogonal code sequence (Code#1, Code#2, ...) for each second aircraft (2, 3, ...n) in order for the first aircraft (1) to distinguish among the different second aircraft (2, 3, ...n).

2. Airborne networked communication system, according to claim 1, wherein the controller comprises means to adapt the power level of the first dedicated channel or frequency (F1) and of the second dedicated channel or frequency (F2) depending on the distance between the first aircraft (1) and a second aircraft (2, 3, ...n) of the plurality of second aircraft (2, 3, ...n).

3. Airborne networked communication system, according to claim 2, wherein the data transmission means of the first aircraft (1) are configured to adapt the power level so that the closest the second aircraft of the plurality of aircraft (2, 3, ...n) is to the first aircraft (1), the lower the radio frequency power level is.

4. Airborne networked communication system, according to any preceding claim, wherein the first aircraft (1) is a tanker aircraft and the plurality of second aircraft (2, 3, ...n) are receiver aircraft.

5. Airborne networked communication system, according to any preceding claim 1 to 3, wherein the first aircraft (1) and the plurality of second aircraft (2, 3, ...n) are aircraft configured to participate in collaborative aerial maneuvers as Close formation of unmanned aircraft or loyal Wingman in close formation with Lead aircraft or Man-Unmanned Teaming (MUT).

6. A first aircraft (1), comprising a controller and data transmission means configured to send and receive data from and to a plurality of second aircraft (2, 3, ...n), the plurality of second aircraft (2, 3, ...n) comprising at least a sensor and an actuator configured to be controlled by the controller of the first aircraft (1) and data transmission means configured to send and receive data from and to the first aircraft (1), the first aircraft (1) and the plurality of second aircraft (2, 3, ...n) being comprised in an airborne communication system for remote control system, wherein data transmission means from the first aircraft (1) to the plurality of second aircraft (2, 3, ...n) is configured to be performed using a first dedicated channel or frequency (F1) and the data transmission means from the plurality of second aircraft (2, 3, ...n) to the first aircraft (1) is configured to be performed using a second dedicated channel or frequency (F2) wherein the data transmission means of each aircraft (2, 3, ...n) of the plurality of second aircraft (2, 3, ...n) is configured to use a different orthogonal code sequence (Code#1, Code#2, ...) in order the first aircraft (1) to distinguish among the different second aircraft (2, 3, ...n).

7. A first aircraft (1), according to claim 6, wherein the first aircraft (1) is a tanker aircraft.

8. A first aircraft (1), according to claim 6, wherein the first aircraft (1) is an aircraft configured to participate in collaborative aerial maneuvers as Close formation of unmanned aircraft or loyal Wingman in close formation with Lead aircraft or Man-Unmanned Teaming (MUT).

9. A second aircraft (2) of a plurality of second aircraft (2, 3, ...n), the second aircraft (2) comprising data transmission means configured to send and receive data to a first aircraft (1), the plurality of second aircraft (2, 3, ...n) comprising at least a sensor and an actuator configured to be controlled by a controller of the first aircraft (1), the first aircraft (1) and the plurality of second aircraft (2, 3, ...n) being comprised in an airborne communication system for a remote control system, wherein data transmission means from the first aircraft (1) to the plurality of second aircraft (2, 3, ...n) is configured to be performed using a first dedicated channel or frequency (F1) and the data transmission means from the plurality of second aircraft (2, 3, ...n) to the first aircraft (1) is performed using a second dedicated channel or frequency (F2) wherein the data transmission means of each aircraft of the plurality of second aircraft (2, 3, ...n) is configured to use a different orthogonal code sequence (Code#1, Code#2, ...) in order the first aircraft (1) to distinguish among the different second aircraft (2, 3, ...n).

10. A second aircraft (2), according to claim 9, wherein the second aircraft (2) is a receiver aircraft of a plurality of receiver aircraft.

11. A second aircraft (2), according to claim 9, wherein the second aircraft (2) is an aircraft of a plurality of aircraft configured to participate in collaborative aerial maneuvers as Close formation of unmanned aircraft or loyal Wingman in close formation with Lead aircraft or Man-Unmanned Teaming (MUT).

12. Airborne networked communication method for a remote control system, **characterized in that** it comprises:
- sending and receiving data from the transmission means of a first aircraft (1) comprising a controller to a plurality of second aircraft (2, 3, ...n),
- sending and receiving data from the transmission means of a second aircraft of the plurality of second aircraft (2, 3, ...n) to the first aircraft (1), the plurality of second aircraft (2, 3, ...n) comprising at least a sensor and an actuator controlled by the controller of the first aircraft (1),
wherein data transmission means from the first aircraft (1) to the plurality of second aircraft (2, 3, ...n) is performed using a first dedicated channel or frequency (F1) and the data transmission means from the plurality of second aircraft (2, 3, ...n) to the first aircraft (1) is performed using a second dedicated channel or frequency (F2) wherein the data transmission means of each aircraft of the plurality of second aircraft (2, 3, ...n) uses a different orthogonal code sequence (Code#1, Code#2, ...) in order the first aircraft (1) to distinguish among the different second aircraft (2, 3, ...n).
